# EUROPÄISCHE PATENTANMELDUNG

(11) **EP 1 466 827 A2**
(43) Veröffentlichungstag der Anmeldung: **13.10.2004**
(21) Anmeldenummer: 04007900.6
(22) Anmeldetag: 01.04.2004
(51) Int. Cl.: B64D 15/20, G01N 21/35

(54) **Sensor für Oberflächen**

(30) Priorität: 07.04.2003 DE 10315676
(71) Anmelder: Huth- Fehre, Thomas, Dr., 48341 Altenberge (DE)
(72) Erfinder: Huth- Fehre, Thomas, Dr., 48341 Altenberge (DE)

(57) **Zusammenfassung**

Es werden ein Verfahren und eine Vorrichtung zum Nachweis und zur Quantifizierung von Vereisungen an Oberflächen wie z.B. Flügeln von Windkraftwerken oder Luftfahrzeugen vorgestellt. Messlicht einer Sendeeinheit wird mit einem Lichtleiter, der in der zu vermessenden Oberfläche bündig endet, direkt an die Messstelle geleitet. Das von Verschmutzungen, Wasser oder Eis zurückgestreute Licht wird mittels einer zweiten Faser aufgenommen und einer Detektoreinheit zugeleitet, die es spektral vermisst. Aus den so gewonnenen Absorptionsspektren wird die korrespondierende Eisschichtdicke rechnerisch ermittelt

## Beschreibung

Die Anmeldung betrifft ein Verfahren und eine Vorrichtung zum Feststellen der Vereisung einer Oberfläche.

### Problembeschreibung und Stand der Technik

Uberall, wo gekrümmte Oberflächen angestromt werden, um Auftriebskräfte zu erzeugen oder in Antriebskräfte umzuwandeln, d h., sowohl bei Luftfahrzeugen. als auch bei Windkraftanlagen, tritt lokale Unterkuhlung auf, wodurch sich bei geeigneten Wetterlagen Eis auf den Oberflächen bilden kann, bevor es auf nichtbeströmten Oberflächen auftritt In beiden Anwendungen ist eine verzugsfreie und direkt am Flügel zu messende (s. auch DE0020206704U1) Festellung einer Eisbildung aus Sicherheitsgründen unerlässlich
In vielen Anwendungen wird die Vereisung einer Oberfläche durch ihr Aufheizverhalten abgefragt, wie z.B in den Schriften DE 0010150320A1, DE0010150078A1, DE 0010129914A1, DE 0004004414A1 oder D0004316557A1 dargelegt Dieses Verfahren ist allerdings auf stark angeströmten Oberflächen nicht benutzbar, da die Wärmeabgabe an die Luft den Prozeß dominiert, aber nicht sauber einschätzbar ist

In Luftfahrzeugen werden z.Z. Ultraschall (wie z B in DE 0003588027), oder Kapazitätsmessungen wie z B in US 5,874,672 benutzt Beide Methoden haben allerdings den Nachteil, recht kompliziert in die Oberflächen integriert werden zu müssen Ausserdem ist bei nichtmetallischen Oberflächen die Beinflussung der Messergebnisse durch luftelektrische Felder und Blitzschläge sehr groß, da elektronische Messsysteme sehr oberflachennah eingesetzt werden müssen

Eine a pnon nicht elektrische Messmethode ist die zur Vereisungsprüfung von Straßenoberflächen benutzte Infrarotspektroskopie ( siehe z B DE 2712199, DE4133359.4, WO 96/26430, US 5,962,853, DE 19736138 2 oder DE19747017 3), die zusätzlich aufgrund der Messung bei mehreren verschiedenen Wellenlängen leicht Vereisung von anderen Verschmutzungen unterscheiden kann All diese Ansätze messen allerdings die Eisschicht von ausserhalb der Oberfläche, was zu unzulässig großen aerodynamischen Beinflussungen führen wurde
In DE0019927015A1 ist nun dieses Verfahren auf eine Messung von innen durch eine Scheibe hindurch ubertragen worden. Hierbei treten allerdings zusätzlich zu den schon oben erwähnten Schwierigkeiten der Elektrostatik und des Blitzschutzes drei neue Probleme auf:
1. Durch die Abwärme der integrierten Beleuchtungsquelle erwärmt sich die zu vermessende Oberfläche unnötig und teilweise unzulässig.
2. Die prinzipbedingt mindestens mehrere Zentimeter Durchmesser aufweisende Glasscheibe, die an der Messstelle die Oberfläche ersetzen muss, bietet aufwachsen wollenden Eiskristallen eine ganz andere Topografie als die Originaloberfläche, wodurch dort abweichende Schichtdicken entstehen können.
3 Durch die breitbandige Beleuchtung und die durch das geringe Streuvermögen einer glatten Eisschicht im Sekundenbereich liegen müssenden Belichtungszeiten, kann nicht gegen Sonnenlichteinstrahlung diskriminiert werden. Da das Sonnenlicht je nach Tageszeit und Wetterlage durch sehr lange mit Eiskristallen besetzten Strecken dringen kann und dennoch im Detektor heller ankommen kann, als das an einer eventuell vorhandnen Eisschicht reflektierte Lampenlicht, kann es so zu einer Falschanzeige von vielen Zentimetern Eisdicke kommen.

### Aufgabe der vorliegenden Erfindung

ist es nun, einen kostengünstig herstellbaren optischen Sensor nach dem Spektroskopieprinzip zu liefern, der Eisschichtdicken zwischen 0,1 und 100 mm sicher bestimmen kann, schmutzunempfindlich ist, möglichst genauso zueist wie die Originaloberfläche, unempfindlich gegen Elektrostatische Felder und Blitzschläge ist und auf Sonnenlicht nicht reagiert.

### Das erfindungsmäßige System

hebt sich im Wesentlichen dadurch von oben genannten Stand der Technik (DE0019927015A1) ab, dass:
**1.** der optoelektronische Teil des Sensors (Sender, Empfänger und Auswerteelektronik) durch bis zu mehrere hundert Meter lange Lichtleiter vom Messort entfernt werden können, wodurch die elektrostatischenund Blitzschlagprobleme gelöst werden,
2 Lichtleiterenden direkt als Messfenster genutzt werden, wodurch eine repräsentative Vereisung gewährleistet ist,
3 Durch den Lichtleitereinsatz das Gesamtsystem optisch so effizient arbeitet, dass mit relativ schwachen Halbleiterlichtquellen gearbeitet werden kann und
4. Die hochfrequente Modulierbarkeit dieser Quellen einen frequenzselektiven und damit rauscharmen Nachweis ermöglicht, der zudem die Einflüsse des ja unmodulierten Sonnenlichts weitgehend unterdrückt

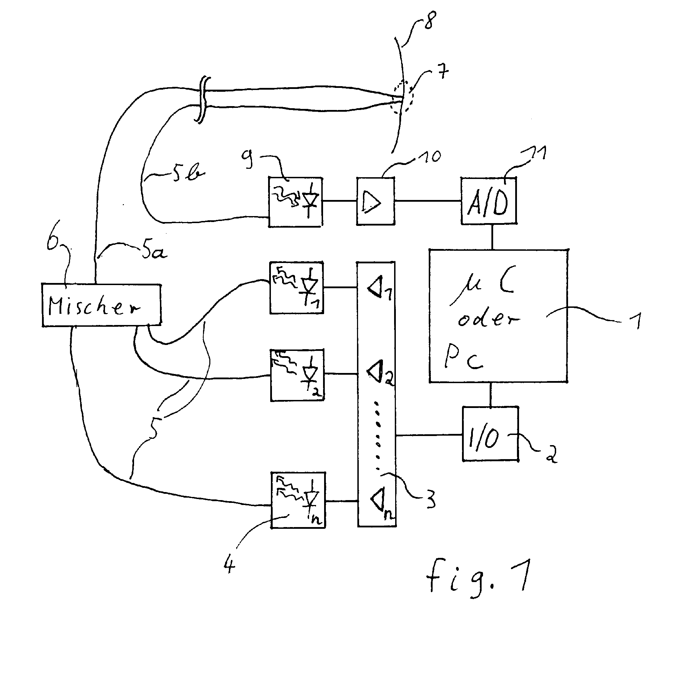

**Eine bevorzugte Ausführungsform** diese Erfindungsgedanken ist in Figur1 schematisch dargestellt und soll im folgenden erläutert werden.

Eine elektronische Kontroll- und Auswerteeinheit **1,** vorzugsweise ein Mikrocontroller oder Pc, schaltet mittels einer Ausgabeeinheit **2** und einer Treiberelektronik **3** lichtemittierende Halbleiter (Leuchtdioden oder Laser) 4 so der Reihe nach ein und aus, dass immer nur ein Emitter zur Zeit eingeschaltet ist. Die Leuchtdioden emittieren bei unterschiedlichen Wellenlängen ausserhalb und innerhalb der Wasser-Absorptionsbanden. Vorzugsweise werden die in der Schrift US 5,962,853 genannten Wellenlängen im Bereich der dritten Harmonischen der O-H-Streckschwingung zwischen 800 und 1100 nm benutzt. Das Licht der mindestens drei Emitter wird mittels Lichtleitfasern **5** einem optischen Mischglied 6 zugeführt, das das Licht der Eingänge homogen mischt und in eine lange Ausgangslichtleitfaser **5a** einkoppelt. Diese endet, aus dem Inneren des von der zu überwachenden Oberfläche **8** begrenzten Raumes, z.B. eines Flügels kommend, im Messfleck 7 bündig mit der Oberfläche. Das von Schmutz, Wasserfilmen, oder Eiskristallen zurückgestreute Messlicht wird von einer Empfangsfaser **5b**, deren Ende direkt neben der Sendefaser in der Oberfläche **8** endet, eingefangen. Diese direkte Faserkopplung hat zwei Vorteile:
1 Der Messfleck bleibt so klein, dass in der Nachbarschaft auf der Originaloberfläche wachsend Eiskristalle ihn "überwuchern" und so sichergestellt ist, dass seine Vereisung repräsentativ ist.
2. Es reichen zur Messung so kleine optische Leistungen aus, dass nichts an- oder abgetaut wird

Die Empfangsfaser **5b** leitet das Licht direkt zu einem Fotoempfänger **9**, vorzugsweise einer Fotodiode. Dessen Fotostrom wird durch einen Verstärker **10** in eine Spannung umgewandelt, die durch einen Analog/Digitalwander **11** der Auswerteeinheit **1** zur Kenntnis gebracht wird. So können die Werte des Reflektionsvermögens der "Oberflächenbeschichtung" (Schmutz, Wasser, Eis) für die verschiedenen Wellenlängen in rascher Abfolge nacheinander ermittelt werden Fügt man nun zwischen den Anschaltperioden der Emitter Pausen ein, so lässt sich in diesen Pausen die Intensität des eventuell vorhandenen Sonnenlichts vermessen. Subtrahiert man nun von dem Messwert einer Messperiode mit eingeschaltetem Emitter den Mittelwert der Messwerte der zwei die Periode einfassenden Pausen, so ist der Einfluß des Sonnenlichts auf die Messergebnisse eliminiert. Wenn alle Emitter einmal angeschaltet waren und die jeweiligen Signale des Empfängers **9** gespeichert wurden, ist im Speicher der Auswerteeinheit **1** ein "Minireflektionsspektrum" vorhanden. Da zur Aufnahme eines solchen Minispektrums nur weniger als eine Millisekunde benötigt wird, können zur Rauschminderung viele tausend solcher Spektrem aufsummiert oder gemittelt werden, ohne dass die Gesamtmessrate zu gering wird. Diese gemittelten Mimspektren können dann von der Auswerteeinheit **1** mittels einer geeigneten Rechenvorschrift, z.B der in der Schrift US 5,962,853 dargelegten, ausgewertet werden, um Wasser und Eis von Schmutz zu unterscheiden und zu quantifizieren
Dieses so ermittelte Ergebnis kann nun in regelmäßigen kurzen Abständen von der Auswerteeinheit **1** per Datenübertagung an das Steuersystem der Windkraftanlage oder des Luftfahrzeugs übermittelt werden

### Vorteilhafte Weiterentwicklungen:

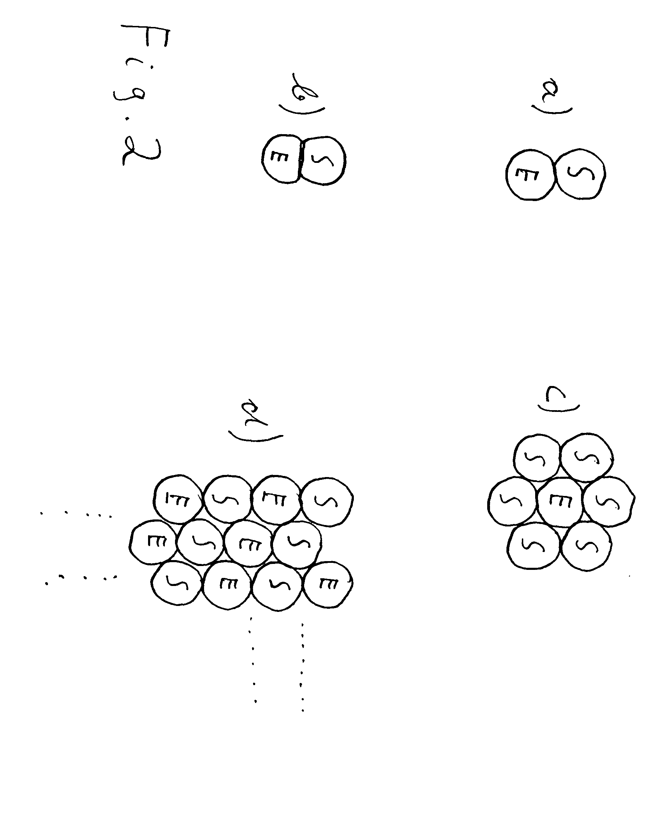

1 Werden die Emitter **4** nicht nur abwechselnd geschaltet, sondern noch zusätzlich höherfrequent getaktet, und im Empängerverstärker **10** diese Taktfrequenz bevorzugt verstärkt, verbessert sich das Signal/Rausch-Verhalten der Gesamtanlage und die Unempfindlichkeit gegen Sonnenlicht wird weiter verbessert.
2. Im Messfleck **7** lassen sich die Sendefaser **5a** und die Empfangsfaser **5b** nicht nur, wie in Figur 2a gezeigt, direkt nebeneinander legen, oder miteinander verschmelzen (s. Figur 2 b), sondern auch jeweils in Faserbündel überführen, so dass verschiede Anordnungen von Fasern möglich sind Hiervon ist bei Faserdurchmessern von mehr als 100 µm die in Figur 2c gezeigte sysmmetriche Anordnung von Vorteil, und bei Faserdurchmessern von weniger als 100 µm die in Figur 2d gezeigte regelmäßige

## Patentansprüche

1. Verfahren zur Feststellung und Quantifizierung von Vereisungen an Oberflächen, **dadurch gekennzeichnet,**
**dass** von einer Sendeeinheit ausgestrahltes Messlicht mittels mindestens einer Lichtleitfaser, die in die zu kontrollierende Oberfläche nahezu bündig eingelassen ist, zur Messstelle geleitet wird, dort an Wasser- oder Eisfilmen zurückgestreut wird, und durch mindestens eine weitere ebenso in die Oberfläche eingelassene Lichtleitfaser wieder eingesammelt und einer Empfangseinheit zugeleitet wird, wobei Sende und Empfangseinheit zusammen sicherstellen, dass das Streuvermögen der Wasser- oder Eisfilme im Bereich der Nahinfrarotstrahlung spektral erfasst und daraus der Grad der Vereisung berechnet werden kann.

2. Verfahren zur Feststellung und Quantifizierung von Vereisungen an Oberflächen, **dadurch gekennzeichnet,**
**dass** von einer Sendeeinheit nur in verschiedenen schmalbandigen Wellenlängenbereichen einzeln nacheinander Messlicht erzeugt wird, das nach Streuung an der zu vermessenden Wasser- oder Eisschicht detektiert wird und eine Auswerteeinheit durch die Zuordnung der gemessenen Empfangsintensitäten zur jeweiligen Sendewellenlänge das Streuvermögen der Wasser- oder Eisfilme im Bereich der Nahinfrarotstrahlung spektral erfasst und daraus den Grad der Vereisung berechnet.

3. Verfahren zur Feststellung und Quantifizierung von Vereisungen an Oberflächen nach Anspruch 1 oder 2, **dadurch gekennzeichnet, dass** in der Sendeeinheit Leuchtdioden verwendet werden.

4. Verfahren zur Feststellung und Quantifizierung von Vereisungen an Oberflächen nach Anspruch 1 oder 2, **dadurch gekennzeichnet, dass** in der Sendeeinheit Halbleiterlaser verwendet werden.

5. Verfahren zur Feststellung und Quantifizierung von Vereisungen an Oberflächen nach Anspruch 2, **dadurch gekennzeichnet, dass** in der Sendeeinheit ein optischer Mischer das Licht verschiedener Lichtquellen so mischt, dass alle Ortsinformationen der Quellen verloren gehen.

6. Verfahren zur Feststellung und Quantifizierung von Vereisungen an Oberflächen nach Anspruch 1, **dadurch gekennzeichnet, dass** die Sende- und Empfangslichtleitfasern im Messfleck direkt benachbart zu einander angeordnet sind.

7. Verfahren zur Feststellung und Quantifizierung von Vereisungen an Oberflächen nach Anspruch 1, **dadurch gekennzeichnet, dass** die Sende- und Empfangslichtleitfasern im Messfleck direkt benachbart zu einander angeordnet und leicht mit einander verschmolzen sind.

8. Verfahren zur Feststellung und Quantifizierung von Vereisungen an Oberflächen nach Anspruch 1, **dadurch gekennzeichnet, dass** die Sende- und/oder Empfangslichtleitfasern zu Faserbündeln aufgespleißt werden können, deren Enden im Messfleck direkt benachbart zu einander angeordnet sind.
